Europäisches Patentamt

European Patent Office

Office européen des brevets

(19)

(11) **EP 0 813 648 B1**

(12) **EUROPÄISCHE PATENTSCHRIFT**

(45) Veröffentlichungstag und Bekanntmachung des Hinweises auf die Patenterteilung:
**02.09.1998 Patentblatt 1998/36**

(51) Int Cl.[6]: **F01N 3/20**

(86) Internationale Anmeldenummer:
**PCT/DE96/00251**

(21) Anmeldenummer: **96902239.1**

(22) Anmeldetag: **19.02.1996**

(87) Internationale Veröffentlichungsnummer:
**WO 96/27733 (12.09.1996 Gazette 1996/41)**

(54) **VORRICHTUNG UND VERFAHREN ZUM AUFHEIZEN EINES ABGASKATALYSATORS FÜR EINE BRENNKRAFTMASCHINE**

DEVICE AND METHOD FOR HEATING A CATALYTIC CONVERTER FOR THE EXHAUST OF AN INTERNAL-COMBUSTION ENGINE

DISPOSITIF ET PROCEDE DE CHAUFFAGE D'UN CONVERTISSEUR CATALYTIQUE DES GAZ D'ECHAPPEMENT D'UN MOTEUR A COMBUSTION INTERNE

(84) Benannte Vertragsstaaten:
**DE FR GB**

(30) Priorität: **07.03.1995 DE 19508013**

(43) Veröffentlichungstag der Anmeldung:
**29.12.1997 Patentblatt 1997/52**

(73) Patentinhaber: **SIEMENS AKTIENGESELLSCHAFT**
**80333 München (DE)**

(72) Erfinder:
- **ANGERMAIER, Anton**
  **D-84172 Thann (DE)**
- **KOCH, Achim**
  **D-93105 Tegernheim (DE)**

(56) Entgegenhaltungen:
**DE-A- 4 239 079      DE-A- 4 239 081**
**US-A- 5 277 025       US-A- 5 390 488**

**Beschreibung**

Die Erfindung betrifft eine Vorrichtung und ein Verfahren zum Aufheizen eines Abgaskatalysators für eine Brennkraftmaschine nach den Oberbegriffen der Patentansprüche 1 und 4.

Die Schadstoffemission einer Brennkraftmaschine läßt sich durch katalytische Nachbehandlung mit Hilfe eines Dreiwege-Katalysators in Verbindung mit einer Lambda-Regelungseinrichtung wirksam verringern. Eine wichtige Voraussetzung hierfür ist jedoch, daß sowohl die Lambda-Sonde der Regelungseinrichtung, als auch der Katalysator ihre Betriebstemperaturen erreicht haben. Um diese beiden Komponenten der Abgasreinigungsanlage schnell auf ihre Betriebstemperatur aufzuheizen, sind bereits verschiedene Heizmaßnahmen vorgeschlagen worden.

Während die Aufheizung der im Verhältnis zum Abgaskatalysator eine geringe Masse aufweisenden Lambda-Sonde mittels einer elektrischen Heizeinrichtung keinerlei technische Probleme aufwirft, geht die Bereitstellung der elektrischen Energie aus dem Bordnetz eines Kraftfahrzeuges für eine in kurzer Zeit zu erfolgenden Aufheizung des Katalysators vielfach über die Kapazität der Fahrzeugstromanlage hinaus.

Um den Schadstoffausstoß während der Kaltstartphase der Brennkraftmaschine, bei der ca. 70 bis 80% der gesamten Schadstoffe von HC und CO ausgestoßen werden, dennoch zu verringern, ist es aus der DE 42 39 079 A1 bekannt, in der Abgasleitung vor dem Katalysator einen zusätzlichen, mit Kraftstoff der Brennkraftmaschine gespeisten Brenner vorzusehen und dadurch den Katalysator rasch auf seine Betriebstemperatur von ca. 300° C (Light-off-Temperatur) aufzuheizen. Zur Erzielung einer möglichst kurzen Aufheizzeit ist der Brenner direkt vor dem Katalysator angeordnet. Der Kraftstoff wird dem Brenner aus der Verteilerleiste des Kraftstoffkreislaufes der Brennkraftmaschine zugeführt und die zur Verbrennung notwendige Luft liefert ein Sekundärluftgebläse. Dieses elektrisch angetriebene Sekundärluftgebläse saugt Luft aus der Umgebung an und pumpt sie über Abschalt- und Luftmengen-Regelventile enthaltende Leitungen bei Bedarf sowohl in die Abgasleitung der Brennkraftmaschine nahe der Auslaßventile, um eine Voroxidation der Abgase zu erzielen, als auch zum Brenner. Da die bekannte Einrichtung neben einer Sekundärluft-Verteilerleitung darüberhinaus noch einen Sekundärluftdruckregler benötigt, der im Überschuß geförderte Sekundärluft in die Atmosphäre abbläst, ergibt sich insgesamt eine relativ aufwendige, weil viele Komponenten enthaltende Einrichtung.

Außerdem führt eine Druckregelung der Sekundärluft und damit der Brennerluft zu Abweichungen der Luftmassenwerte bei Betrieb der Brennkraftmaschine bei unterschiedlichen Umgebungsdrücken und Umgebungstemperaturen, da sich dabei die Luftdichte ändert.

Der Erfindung liegt deshalb die Aufgabe zugrunde, eine Vorrichtung und ein Verfahren zum Aufheizen eines Abgaskatalysators für eine Brennkraftmaschine mit einem eingangs genannten Brennersystem anzugeben, mit der bzw. mit dem auf einfache Weise mit geringem Materialaufwand eine möglichst rasche Entgiftung der beim Start der Brennkraftmaschine ausgestoßenen Abgase erreicht werden kann.

Gelöst wird dies mit einer Vorrichtung und einem Verfahren gemäß den Merkmalen der Patentansprüche 1 und 4.

Vorteilhafte Weiterbildungen sind in den Unteransprüchen. angegeben.

Durch die Zuführung der von einer Sekundärluftpumpe geförderten Sekundärluft über eine einzige, einen Luftmassenmesser aufweisende Leitung zu der Brennkammer eines zur Katalysatoraufheizung dienenden Brenners ergibt sich eine, gegenüber dem bekannten Stand der Technik vereinfachte Anordnung. Die komplette Luftzuführung zur Einleitung der Sekundärluft an einer Stelle in den Abgastrakt nahe der Auslaßventile inklusive der dafür notwendigen Abschalt- und, Mehrweg-Regelventile kann entfallen.

Die chemischen Reaktionen in diesem Teil des Abgassystems sind nicht nötig, da der Katalysator nach der Brennerheizzeit zumindest in seinem vorderen Teil, d.h. im Einströmbereich der Abgase soweit erwärmt ist, daß die Reaktionen im Katalysator sichergestellt sind und somit dieser sehr schnell auf eine Betriebstemperatur aufgeheizt wird, bei der seine volle Konvertierungsfähigkeit erlangt.

Durch die Ansteuerung der Sekundärluftpumpe mit einem getakteten elektrischen Signal in Verbindung mit dem Luftmassenmesser, der den Luftmassenstrom der Sekundärluftpumpe erfaßt, kann die Sekundärluftpumpe gezielt vorgesteuert werden und es ist keine Luftmengenregulierung über ein Ventil nötig, so daß der Energieaufwand für eine bestimmte, aufzubringende Luftmasse erheblich reduziert werden kann.

Dies führt zu einer geringeren Belastung der Fahrzeugbatterie und zu einer geringeren Erwärmung der Sekundärluftpumpe im Betrieb, wodurch sich längere Standzeiten der Sekundärluftpumpe erzielen lassen.

Durch Messen des Luftmassenstromes mit Hilfe des Luftmassenmessers kann eine Anpassung der Sekundärluftpumpenansteuerung an unterschiedliche Umgebungsbedingungen erfolgen mit dem Ziel, das Brennerluftverhältnis auf konstante Werte einzustellen.

Ein Ausführungsbeispiel der Erfindung ist in der Zeichnung dargestellt und wird anhand der nachfolgenden Beschreibung näher erläutert. Dabei zeigen:

Figur 1     ein vereinfachtes Blockschaltbild einer Brennkraftmaschine mit einem Brenner zum Aufheizen eines Abgaskatalysators ,

Figur 2     eine Auswahl von zeitabhängigen Signalverläufen zur Verdeutlichung der Erfindung.

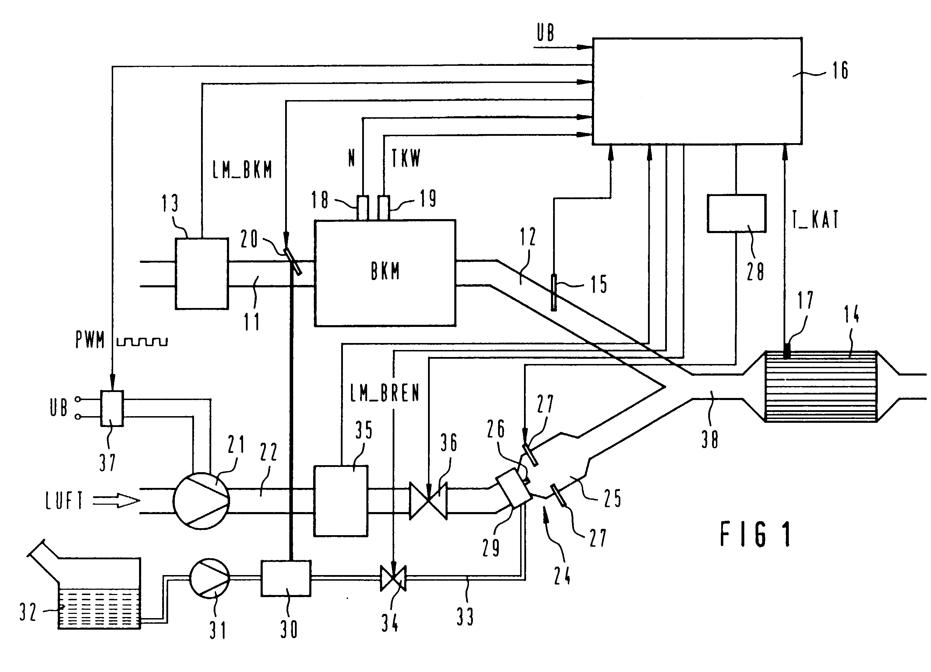

Bei dem in der Figur 1 in vereinfachter Form dargestellten Blockschaltbild sind nur diejenigen Teile gezeichnet, die für das Verständnis des erfindungsgemäßen Verfahrens notwendig sind.

Mit dem Bezugzeichen 10 ist eine Brennkraftmaschine mit einer Ansaugleitung 11 und einer Abgasleitung 12 bezeichnet. Ein in der Ansaugleitung 11 angeordneter Luftmassenmesser 13 mißt die von der Brennkraftmaschine 10 angesaugte Luftmasse LM_BKM. Der Luftmassenmesser 13 kann dabei als Hitzdrahtoder als Heißfilmluftmassenmesser realisiert sein. In der Abgasleitung 12 ist stromaufwärts eines zum Konvertieren der im Abgas der Brennkraftmaschine 10 enthaltenen Bestandteile HC, CO und $NO_x$ dienenden Dreiwege-Katalysators 14 eine Lambda-Sonde 15 eingefügt, die in Abhängigkeit vom Restsauerstoffgehalt im Abgas ein Ausgangssignal an eine elektronische Steuerungseinrichtung 16 der Brennkraftmaschine 10 abgibt. Als Lambda-Sonde wird dabei vorzugsweise eine sogenannte Sprungsonde verwendet, die bei einer stöchiometrischen Gemischzusammensetzung des Kraftstoff-Luftgemisches von $\lambda = 1,00$ einen Sprung des Ausgangssignals, beispielsweise der Ausgangsspannung von einem hohen Wert (typisch 900-1000 mV) bei einer fetten Gemischzusammensetzung ($\lambda < 1,00$) zu einem niedrigen Wert (typisch 100-200 mV) bei einer mageren Gemischzusammensetzung ($\lambda > 1,00$) aufweist ($ZrO_2$-Sonde). Darüberhinaus kann auch eine Sprungsonde verwendet werden, bei der der elektrische Widerstand bei $\lambda = 1,00$ eine Sprungfunktion aufweist ($TiO_2$-sonde).

Außerdem besteht die Möglichkeit, anstelle dieser Sonden, die eine Sprungfunktion aufweisen, eine sogenannte lineare Lambda-Sonde einsetzen. Solche Sonden zeigen in einem schmalen Bereich um $\lambda = 1$ eine lineare Abhängigkeit ihres Ausgangssignales von dem Restsauerstoffgehalt im Abgas.

Die vor dem Katalysator 14 angeordnete Lambda-Sonde 15 dient in herkömmlicher Weise als Regelglied für eine Lambda-Regelung des Kraftstoff-Luftgemisches der Brennkraftmaschine. Ein im vorderen Bereich des Katalysators 14, d.h. nahe dem Einlaßbereich der Abgase in den Katalysator angeordneter Temperatursensor 17 erfaßt die dort herrschende Katalysatortemperatur T_KAT.

Ferner sind an geeigneten Stellen der Brennkraftmaschine 10 noch ein Sensor 18 zum Erfassen der Maschinendrehzahl N und ein Temperatursensor 19 zum Erfassen der Kühlmitteltemperatur TKW vorgesehen. Die Ausgänge der beiden Sensoren sind über Schnittstellen mit entsprechenden Eingängen der elektronischen Steuerungseinrichtung 16 für die Brennkraftmaschine 10 verbunden. Solche elektronischen Steuerungseinrichtungen für Brennkraftmaschinen, die neben der Kraftstoffeinspritzung auch noch eine Vielzahl weiterer Aufgaben, u.a. auch die On-Board-Diagnose abgasrelevanter Komponenten übernehmen können, sind an sich bekannt, so daß im folgenden nur auf den im Zusammenhang mit der vorliegenden Erfindung stehenden Aufbau und dessen Wirkungsweise eingegangen wird.

Kernstück der elektronischen Steuerungseinrichtung 16 ist ein Mikrocomputer, der nach einem festgelegten Programm die erforderlichen Funktionen steuert. Bei einer sogenannten luftmassengeführten Motorsteuerung wird mit Hilfe der von den Sensoren (Luftmassenmesser 13 und Drehzahlsensor 18) gelieferten und in entsprechenden Schaltungen aufbereiteten Signale Luftmasse LM_BKM und Drehzahl N eine Grundeinspritzzeit oder Basiseinspritzzeit TI_B berechnet und abhängig von weiteren Betriebsparametern (z.B. Druck und Temperatur der Ansaugluft, Temperatur des Kühlmittels, Batteriespannung usw.) Korrekturen dieser Basiseinspritzzeit TI_B derart durchgeführt, daß im Regelfall durch Einsatz der Lambda-Regelung ein Kraftstoff-Luftgemisch erzielt wird, das dem stöchiometrischen Verhältnis ($\lambda = 1,00$) entspricht. Der Kraftstoff für die Brennkraftmaschine 10 wird dann während der so berechneten Zeitspanne mit Hilfe eines oder mehrerer Einspritzventile 20 in die Ansaugleitung 11 eingespritzt.

Ein elektrisch angetriebenes Gebläse 21, vielfach als Sekundärluftpumpe oder als Sekundärluftgebläse bezeichnet, saugt Frischluft über eine nicht näher bezeichnete, vorzugsweise einen Luftfilter aufweisende Luftleitung an und fördert diese Zusatzluft bei Bedarf über eine Brennerluftleitung 22 zu einem, zur externen Erhitzung des Katalysators 14 dienenden Brenner 24.

Die elektrische Energie für die Sekundärluftpumpe 21 wird der Fahrzeugbatterie entnommen und über eine elektronische Schalteinrichtung 37 zugeführt. Die Ansteuerung der Schalteinrichtung 37 erfolgt über ein pulsweitenmoduliertes Signal S_PWM von der elektronischen Steuerungseinrichtung 16.

In der Brennerluftleitung 22 ist ein weiterer Luftmassenmesser 35 angeordnet, der ein entsprechend der von der Sekundärluftpumpe 21 geförderten Luftmasse ein Signal LM_BR an die elektronische Steuerungseinrichtung 16 der Brennkraftmaschine 10 abgibt. Dieser Luftmassenmesser 35 kann analog dem Luftmassenmesser 13 der Brennkraftmaschine 10 aufgebaut sein.

Die Luft für den Brenner 24 kann von der Sekundärluftpumpe 21 auch über das Luftfilter der Brennkraftmaschine 10 und einer entsprechenden Verbindungsleitung angesaugt werden. Bei einer solchen Anordnung ist es dann besonders vorteilhaft, wenn der Luftmassenmesser 35 zwischen dem Luftfilter und Sekundärluftpumpe 21 angeordnet ist. Dies beugt einer Verschmutzung des Luftmassenmesser 35 vor und die thermische Belastung sinkt ebenfalls.

Im weiteren Verlauf der Brennerluftleitung 22 ist ein Luftabschaltventil 36 eingeschaltet, das über ein elektrisches Signal von der Steuerungseinrichtung 16 der Brennkraftmaschine 10 angesteuert werden kann und die Luft zum Brenner 24 entweder freigibt oder absperrt.

Um Verschmutzungen des Luftmassenmesser 35 bei hohen Abgasgegendrücken der Brennkraftmaschine 10 zu vermeiden, kann dieses Luftabschaltventil 36 ein integriertes Rückschlagventil aufweisen.a

Der Brenner 24 besteht im wesentlichen aus einer Brennkammer 25 mit einer Brennerdüse oder einem Einspritzventil 26 und Zündelektroden 27, die in die Brennkammer 25 reichen und die über ein Zündmodul 28 angesteuert werden. Das Zündmodul 28 kann dabei mit der Steuerungseinrichtung 16 der Brennkraftmaschine entweder eine bauliche Einheit bilden oder wie dargestellt, als externes Zündmodul realisiert sein. Außerdem weist der Brenner 24 einen Brennstoffregler 29 mit einem integriertem Absperrventil auf, dem die zur Verbrennung notwendige Luft (Brennerluft) und der aus dem Kraftstoffkreislauf der Brennkraftmaschine bereitgestellte Brennstoff zugeführt wird.

Der detaillierte Aufbau eines solchen Brennersystems kann beispielsweise dem Dokument DE 42 39 079 A1 entnommen werden.

Der Brennstoff für den Brenner 24 wird über eine Brennstoffleitung 33 aus einer druckbeaufschlagten Kraftstoffverteilerleiste 30 entnommen, die auch die Einspritzventile 20 der Brennkraftmaschine mit Kraftstoff versorgt. Eine Kraftstoffpumpe 31 fördert den Kraftstoff von einem Vorratstank 32 zu der Kraftstoffverteilerleiste 30. Weitere Komponenten des Kraftstoffkreislaufs der Brennkraftmaschine, wie beispielsweise Druckregler, Kraftstoffilter und Rückführleitungen, die zum Betrieb der Brennkraftmaschine notwendig sind, sind aus Gründen der Übersichtlichkeit weggelassen.

In der Brennstoffleitung 33 ist ein Brennstoffabschaltventil 34 eingefügt, das über entsprechende Signale der Steuerungseinrichtung 16 ansteuerbar ist und das abhängig von den Ansteuersignalen den Querschnitt der Brennstoffleitung 33 entweder freigibt oder verschließt. Dieses Brennstoffabschaltventil 34 und das integrierte Absperrventil im Brennstoffregler 29, die beide vorzugsweise im stromlosen Zustand geschlossen sind, werden aus Sicherheitsgründen zum selben Zeitpunkt angesteuert, aber über verschiedene Endstufen und getrennte Leitungen, so daß bei Ausfall eines der Ventile das andere Ventil den Brennstoffkreislauf zum Brenner 24 unterbrechen kann.

Die Abgase des Brenners 24 werden zusammen mit den Abgasen der Brennkraftmaschine 10 über ein, einen y-förmigen Abschnitt aufweisendes Abgasrohr dem Katalysators 14 zugeführt. Dadurch werden Strömungsverläufe des Abgases erreicht, die eine über den Querschnitt des Katalysators 14 gleichmäßige und daher optimale Erhitzung des Katalysators 14 ermöglicht.

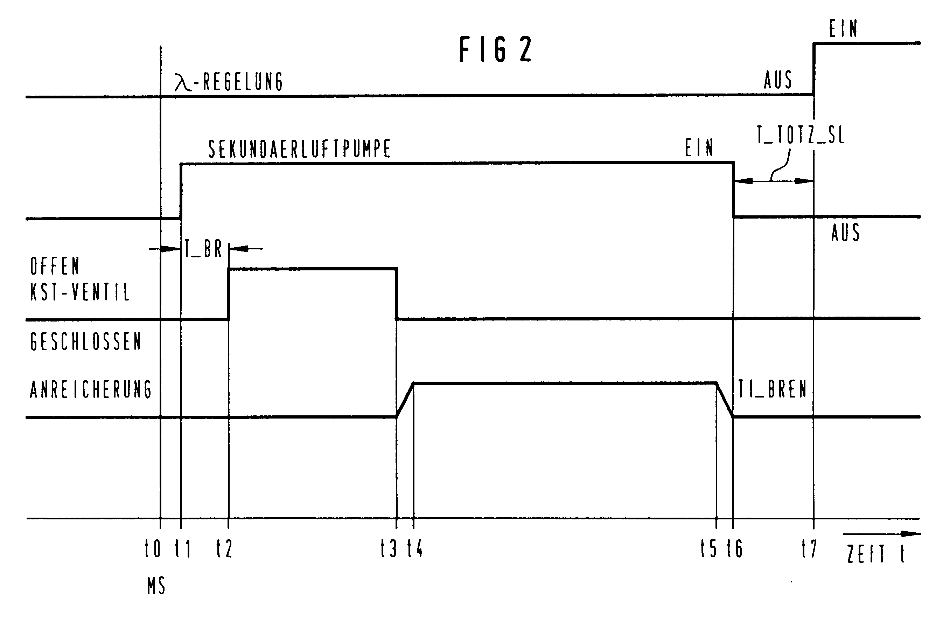

Die Funktion der Vorrichtung wird nun im Zusammenhang mit der Figur 2 erläutert.

Zum Zeitpunkt t0 (Motorstart, MS) wird die Brennkraftmaschine 10 gestartet und dann, wenn eine vorgegebene Drehzahlschwelle für die Brennkraftmaschine überschritten wird, wird über ein pulsweitenmoduliertes Signal S_PWM von der elektronischen Steuerungseinrichtung 16 die Sekundärluftpumpe 21 angesteuert und über das Zündmodul 28 die Zündung des Brenners 24 eingeschaltet (Zeitpunkt t1). Da die Sekundärluftpumpe 21 eine gewisse Anlaufzeit benötigt, bis die zur Verbrennung notwendige Luft in der Brennkammer des Brenners 24 zur Verfügung steht und damit auch ein vorgegebener Wert für den Luftmassendurchsatz mit Hilfe des Luftmassenmessers 35 erst nach einer zeitlichen Verspätung nach dem Einschalten der Sekundärluftpumpe 21 erreicht werden kann, wird die Brennstoffzuführung zum Brenner 24 erst nach einer Zeitverzögerung T_BR seit dem Einschalten der Sekundärluftpumpe 21 zum Zeitpunkt t2 durch Öffnen des Brennstoffabschaltventiles 34 und durch Öffnen des integrierten Absperrventils im Brennstoffregler 29 freigegeben. Durch die unverzügliche Freigabe des Brennstoffes für den Brenner 24 dann, wenn der Luftmassenmesser 35 einen Wert erfaßt, der über einem bestimmten, vorgegebenen Wert für die Luftmasse LM_BREN liegt, ergibt sich eine besonders kurze Zeitspanne innerhalb derer der Katalysators 14 seine Anspringtemperatur erreicht.

Dieser Wert für den Lufmassenstrom ist abhängig von der Konstruktion der gesamten Sekundärluftanlage, insbesondere von der Leistungsfähigkeit der Sekundärluftpumpe 21 festgelegt.

Während der Zeit T_BR erfolgt nach an sich bekannter Weise eine Überwachung der Zündeinrichtung des Brenners 24, beispielsweise durch Überprüfen der Sekundärspannung der Zündeinrichtung über das Zündmodul 28. Ergibt diese Überprüfung, daß eine fehlerhafte Zündung vorliegt, dann bleibt die Brennstoffzufuhr zum Brenner 24 unterbrochen. Die Brennstoffzufuhr bleibt auch unterbrochen, wenn der Luftmassenmesser 35 trotz Ansteuerung der Sekundärluftpumpe 21 kein Signal LM_BR an die elektronische Steuerungseinrichtung 16 abgibt. Dadurch kann auch ein geschlossen klemmendes Luftabschaltventil 36 detektiert werden.

Nach zugeschaltetem Brennstoff für den Brenner 24 erfolgt eine Überwachung des Verbrennungsvorganges mit Hilfe der Zündspannung an den Zündelektroden 27 des Brenners 24.

Das Brennstoffabschaltventil 34 und das in den Brennstoffregler integrierte Absperrventil bleiben solange geöffnet, bis der Katalysator 14 eine vorgegebene Temperatur erreicht hat (Zeitpunkt t3). Die Temperatur wird mit Hilfe des Temperaturfühlers 17 erfaßt.

Nach Unterbrechen der Brennstoffzufuhr zu dem Brenner 24 durch Schließen des Brennstoffabschaltventils 34 und des integriertem Absperrventil im Brennstoffregler 29 zum Zeitpunkt t3 wird das Kraftstoff-Luftgemisch der Brennkraftmaschine 10 ausgehend von einem Wert, der aufgrund der hekömmlichen Warmlauffunktion eingestellt war, angefettet. Die Gemischanreicherung erfolgt nicht sprunghaft, sondern langsam über eine sogenannte Rampenfunktion. Dadurch wird ein eventuell auftretender Drehmomentsprung vermieden und ein stetiger Drehmomentverlauf erreicht, wodurch das Fahrverhalten des Kraftfahrzeugs verbessert wird.

Zum Zeitpunkt t4 ist der Maximalwert der Anfettung erreicht und diese fette Vorsteuerung des Gemisches der Brennkraftmaschine 10 wird bis zum Zeitpunkt t5 aufrechterhalten. Anschließend wird diese Gemischanreicherung wieder über eine Rampenfunktion langsam auf den Ausgangswert reduziert (Zeitpunkt t6) und die Sekundärluftpumpe 21 ausgeschaltet. Um die Gemischzusammensetzung während der Aufheizung des Katalysators 14 nicht zu beeinflussen, bleibt die Lambda-Regelung der Brennkraftmaschine 10 solange unterdrückt, bis die Sekundärluftpumpe 21 abgeschaltet wird.

Erst nach Ablauf der Totzeit T TOTZ SL wird zum Zeitpunkt t7 die Lambda-Regelung der Brennkraftmaschine 10 wieder zugeschaltet. Dadurch erhält man definierte Verhältnisse, da nach Verstreichen dieser Zeitspanne keine Einflüsse aufgrund des Sekundärluftbetiebes und der fetten Vorsteuerung mehr vorhanden sind.

Die Gemischanreicherung durch eine Verlängerung der Einspritzzeit soll eine schnelle Aufheizung des Ka-talysators während der Sekundärlufteiblasung unter-stützen.

Um eine gute HC-Konvertierung zu erhalten, darf die Kraftstoffanreicherung durch die ohnehin stattfin-dende Warmlaufanreicherung und die Katalysatorheiz-maßnahmen durch den Brennerbetrieb bzw. der Sekundärlufteinblasung nur so groß sein, daß sich insgesamt im Katalysator 14 ein mageres Gemisch ergibt.

Die zusätzliche Gemischanreicherung TI_BREN nach Ausschalten des Brenners (Zeitpunkt t3), aber noch bei eingeschalteter Sekundärluftpumpe 21 be-stimmt sich zu

$$TI\_BREN = \frac{LM\_BREN}{LM\_BKM},$$

wobei

LM_BREN die mittels der Sekundärluftpumpe 21 geförderte und vom Luftmassenmesser 35 gemessene Sekundärluftmasse des Brenners 24 ist, und LM_BKM der Motorluftmassenstrom, der vom Luftmassenmesser 13 ermittelt wird.

Je höher der Luftmassendurchsatz LM_BKM der Brennkraftmaschine 10 ist, desto geringer kann bei gleichbleibend geförderter Sekundärluft die Anfettung des Gemisches der Brennkraftmaschine 10 sein, um einen bestimmten Wert für das Lambda vor dem Katalysators 14 zu erreichen.

Sind in dem Motormanagement weitere Anreicherungsfunktionen wie zB. Warmlauf vorgesehen, so muß von dem Wert TI_BREN noch ein Faktor TI_FAK_WL, der den Warmlauf berücksichtigt, subtrahiert werden, um die einwandfreie Lauffähigkeit der Brennkraftmaschine zu gewährleisten.

Der Einfluß auf die Einspritzzeit TI für die Brennkraftmaschine 10 aufgrund der Katalysatorsaufheizung ergibt sich somit aus der Beziehung

$$TI = (TI\_B + \ldots..) * (1 + TI\_BREN + \ldots.)$$

mit TI_BREN = LM_BREN/LM_BKM - TI_FAK_WL, wobei TI_FAK_WL den Warmlaufanreicherungsfaktor darstellt. Um die Fahrbarkeit des mit einer solchen Katalysator-Heizfunktion ausgestatteten Fahrzeugs nicht zu verschlechtern und um eine zu starke Anfettung insbesondere im Leerlauf zu verhindern, was zu Überhitzung des Katalysators und zu Verbrennungsaussetzern führen kann, muß die zusätzliche Einspritzzeit TI_BREN zur Katalysatoraufheizung begrenzt werden. Hierzu werden für die Lastbereiche Leerlauf, Teillast und Schubbetrieb verschiedene Grenzwerte festgelegt, bei deren Überschreiten keine weitere Anfettung mehr stattfindet. Die Grenzwerte für die verschiedenen Lastbereiche sind in einem Speicher der elektronischen Steuerungseinrichtung 16 abgelegt.

In einem weiteren Speicher der elektronischen Steuerungseinrichtung der Brennkraftmaschine 10 ist in einem Kennfeld der von der Sekundärluftpumpe 21 geförderte Luftmassenstrom LM_BREN, beispielsweise in der Einheit kg/h in Abhängigkeit von dem Tastverhältnis 0-100% des Ansteuersignals S_PWM der Sekundärluftpumpe 21 abgelegt. Da dieser Zusammenhang nur für einen bestimmten Wert der Batteriespannung UB (in der Regel 14 V) des Kraftfahrzeugs und damit für die Versorgungsspannung der Sekundärluftpumpe 21 gilt, wird das Tastverhältnis des Ansteuersignals S_PWM der Sekundärluftpumpe 21 mit einem Faktor korrigiert, der den aktuellen Wert der Batteriespannung berücksichtigt.

Eine bestimmte Luftmasse LM_BREN kann also allein durch Wahl des Tastverhältnisses des Ansteuersignals S_PWM der Sekundärluftpumpe 21 eingestellt werden.

Alternativ hierzu ist es aber auch möglich, die Sekundärluftpumpe 21 zum Aufheizen des Katalysators 14 mit Hilfe eines einfachen Schalters immer an die Batteriespannung des Kraftfahrzeug zu legen und eine bestimmte Luftmasse für den Brenner 24 durch ein elektrisch getaktetes Ventil in der Brennerluftleitung 22 einzustellen.

Um sicherzustellen, daß der Katalysator 14 nach einer kurzen Unterbrechung des Betriebes der Brennkraftmaschine 10 und darauffolgendem Start durch erneutes Heizen nicht überhitzt wird, weil der Katalysator 14 noch nicht abgekühlt ist, wird die Temperatur des Katalysators 14 mittels des Teperatursensors 17 erfaßt. Nur wenn sie unter einem festgelegten Grenzwert liegt, wird der Brenner 24 beim Starten der Brennkraftmaschine 10 wieder aktiviert.

Eine andere Möglichkeit besteht darin, die Temperatur des Katalysators 14 beim erneuten Starten der Brennkraftmaschine 10 anhand eines sogenannten Ersatztemperaturmodells zu ermitteln und in Abhängigkeit davon den Brennerbetrieb entweder einzuleiten oder zu unterbinden. Hierzu kann die verstrichene Zeit seit dem Start der Brennkraftmaschine und/oder des Brenners und der Luftmassendurchsatz der Brennkraftmaschine herangezogen werden. Dadurch kann der Temperatursensor 17 eingespart werden, wodurch sich die Vorrichtung noch weiter vereinfacht.

Darüberhinaus ist es auch möglich, beim Abstellen der Brennkraftmaschine die Kühlmitteltemperatur abzuspeichern. Ist diese nicht um einen bestimmten, vorgebbaren Wert zum Zeitpunkt des darauffolgenden Starts der Brennkraftmaschine abgefallen, so wird von einem noch warmen Katalysator ausgegangen und der Brenner wird nicht aktiviert.

**Patentansprüche**

1. Vorrichtung zum Fremdbeheizen eines im Abgasstrang (12, 38) einer Brennkraftmaschine (10) angeordneten und zur Abgasentgiftung dienenden Katalysators (14),

   - mit einem elektrisch angetriebenen Sekundärluftgebläse (21), das Sekundärluft aus der Umgebung fördert,
   - mit einem Brenner (24), dem die geförderte Sekundärluft und Brennstoff aus einem Brennstoffkreislauf (32, 31, 30, 34, 33) zugeführt wird, wobei der Katalysator (14) durch Verbrennung des Brennstoff-/Luftgemisches in einer Brennkammer (25) oder durch Einblasen der Sekundärluft in den Abgasstrang (12, 38) der Brennkraftmaschine (10) erhitzt wird,

   **gekennzeichnet durch**

   - eine einzige Luftzuführung (22), welche die von dem Sekundärluftgebläse (21) geförderte Sekundärluft ausschließlich über die Brennkammer (25) des Brenners (24) in den Abgasstrang (12, 38) leitet und,

   - einen in der Luftzuführung (22) angeordneten Luftmassenmesser (35), der die vom Sekundärluftgebläse (21) geförderte Luftmasse (LM_BREN) erfaßt.

2. Vorrichtung nach Anspruch 1,
   **dadurch gekennzeichnet,** daß die vom Sekundärluftgebläse (21) gelieferte Sekundärluftmasse (LM_BREN) durch Ändern der Höhe ihres elektrischen Ansteuersignals (S_PWM) eingestellt werden kann.

3. Vorrichtung nach Anspruch 1,
   **dadurch gekennzeichnet,** daß die vom Sekundärluftgebläse (21) gelieferte Sekundärluftmasse (LM_BREN) durch getaktete Ansteuerung eines elektrischen Ventils in der Luftzuführung (22) eingestellt werden kann.

4. Verfahren zum Fremdbeheizen eines im Abgasstrang (12, 38) einer Brennkraftmaschine (10) angeordneten und zur Abgasentgiftung dienenden Katalysators (14),

   - mit einem elektrisch angetriebenen Sekundärluftgebläse (21), das Sekundärluft aus der Umgebung fördert,
   - mit einem Brenner (24), dem die geförderte Sekundärluft und Brennstoff aus einem Brennstoffkreislauf (32, 31, 30, 34, 33) zugeführt wird, wobei der Katalysator (14) durch Verbrennung des Brennstoff-/Luftgemisches in einer Brennkammer (25) oder durch Einblasen der Sekundärluft in den Abgasstrang (12, 38) der Brennkraftmaschine (10) erhitzt wird,

   **dadurch gekennzeichnet,** daß

   - die vom Sekundärluftgebläse (21) geförderte Sekundärluftmasse (LM_BREN) über eine einzige Luftzuführung (Brennerluftleitung 22) ausschließlich über die Brennkammer (25) des Brenners (24) dem Abgasstrang (12, 38) der Brennkraftmaschine (10) zugeführt wird.

5. Verfahren nach Anspruch 4,
   **dadurch gekennzeichnet,** daß

   - die Sekundärluftmasse (LM_BREN) mittels eines Luftmassenmesssers (35) erfaßt wird,
   - die erfasste Sekundärluftmasse (LM_BREN) mit einem vorgebbaren Wert verglichen wird, und
   - in Abhängigkeit des Ergebnisses dieses Vergleiches ein Ansteuersignal (S_PWM) für das Sekundärluftgebläse (21) in seinem Wert derart verändert wird, daß die Abweichung zwischen erfaßter Sekundärluftmasse (LM_BREN) und vorgegebener Sekundärluftmasse minimiert wird.

6. Verfahren nach Anspruch 5,
   **dadurch gekennzeichnet,**
   daß als Ansteuersignal (S_PWM) für das Sekundärluftgebläse (21) ein pulsweitenmoduliertes Signal dient und das Tastverhältnis (0-100%) dieses Signals abhängig von Werten für die Sekundärluftmasse (LM_BREN) festgelegt ist.

7. Verfahren nach Anspruch 6,
   **dadurch gekennzeichnet,**
   daß das Tastverhältnis (0-100%) für das Ansteuersignal (S_PWM) abhängig von der aktuellen, an dem Sekundärluftgebläse (21) anliegenden Batteriespannung (UB), korrigiert wird.

8. Verfahren nach Anspruch 5,

**dadurch gekennzeichnet,** daß

- nach dem Starten (Zeitpunkt t0) der Brennkraftmaschine (10) das Sekundärluftgebläse (21) eingeschaltet und die Brennstoffversorgung des Brenners (24) freigegeben wird,
- die Brennstoffversorgung des Brenners (24) solange aufrecht erhalten bleibt, bis der Katalysator (14) eine vorgegebene Temperatur erreicht hat,
- ab diesem Zeitpunkt (t3) unter Aufrechterhaltung der Sekundärluftzufuhr zum Brenner (24) die Brennstoffversorgung des Brenners (24) unterbunden wird,
- das Kraftstoff-Luftgemisch der Brennkraftmaschine (10) für eine vorgebbare Zeitspanne (t3 -t6) angereichert wird,
- nach Ablauf dieser Zeitspanne die Anreicherung zurückgenommen und das Sekundärluftgebläse (21) abgeschaltet wird.

9. Verfahren nach Anspruch 8,
   **dadurch gekennzeichnet,**
   daß der Anreicherungswert (TI_BREN) aus dem Quotienten der von der Brennkraftmaschine 10 angesaugten Luftmasse (LM_BKM) und der von dem Sekundärluftgebläse (21) gelieferten Luftmasse (LM_BREN) bestimmt ist.

10. Verfahren nach Anspruch 9,
    **dadurch gekennzeichnet,**
    daß der Anreicherungswert (TI_BREN) mit einem vor dem Brennerbetrieb eingestellten Warmlauffaktor korrigiert wird.

## Claims

1. Device for the external heating of a catalyser (14) which is arranged in the exhaust line (12, 38) of an internal combustion engine (10) and serves for exhaustgas detoxification,

   - with an electrically driven secondary air blower (21) which delivers secondary air from the surroundings,
   - with a burner (24) to which the secondary air delivered and fuel from a fuel circuit (32, 31, 30, 34, 33) are supplied, and the catalyser (14) is heated by combustion of this fuel/air mixture in a combustion chamber (25) and/or by injecting secondary air into the exhaust line (12, 38) of the internal combustion engine (10),

   characterized by

   - a single air feed (22) which carries the secondary air delivered by the secondary air blower (21) into the exhaust line (12, 38) exclusively via the combustion chamber (25) of the burner (24) and
   - an air mass meter (35) which is arranged in the air feed (22) and detects the air mass (LM_BREN) delivered by the secondary air blower (21).

2. Device according to Claim 1, characterized in that the secondary air mass (LM_BREN) supplied by the secondary air blower (21) can be adjusted by changing the level of its electrical drive signal (S_PWM).

3. Device according to Claim 1, characterized in that the secondary air mass (LM_BREN) supplied by the secondary air blower (21) can be adjusted by pulsed driving of an electric valve in the air feed (22).

4. Method for the external heating of a catalyser (14) which is arranged in the exhaust line (12, 38) of an internal combustion engine (10) and serves for exhaust-gas detoxification,

   - with an electrically driven secondary air blower (21) which delivers secondary air from the surroundings,
   - with a burner (24) to which the secondary air delivered and fuel from a fuel circuit (32, 31, 30, 34, 33) are supplied, the catalyser (14) being heated by combustion of the fuel/air mixture in a combustion chamber (25) or by injecting secondary air into the exhaust line (12, 38) of the internal combustion engine (10),

   characterized in that

   - the secondary air mass (LM_BREN) delivered by the secondary air blower (21) is supplied to the exhaust line (12, 38) of the internal combustion engine (10) via a single air feed (burner-air line 22) and exclusively via the combustion chamber (25) of the burner (24).

5. Method according to Claim 4, characterized in that

   - the secondary air mass (LM_BREN) is detected by means of an air mass meter (35),
   - the secondary air mass (LM_BREN) detected is compared with a predeterminable value and
   - a drive signal (S_PWM) for the secondary air blower (21) has its value changed as a function of the result of this comparison in such a way that the difference between the secondary air mass (LM_BREN) detected and the predetermined secondary air mass is minimized.

**6.** Method according to Claim 5, characterized in that a pulse-width-modulated signal is used as the drive signal (S_PWM) for the secondary air blower (21) and the duty factor (0-100%) of this signal is determined as a function of values for the secondary air mass (LM_BREN).

**7.** Method according to Claim 6, characterized in that the duty factor (0-100%) for the drive signal (S_PWM) is corrected as a function of the current battery voltage (UB) applied to the secondary air blower (21).

**8.** Method according to Claim 5, characterized in that

- after the internal combustion engine (10) has been started (time t0), the secondary air blower (21) is switched on and the fuel supply to the burner (24) is enabled,

- the fuel supply to the burner (24) is maintained until the catalyser (14) has reached a predetermined temperature,
- from this time (t3) onwards, the fuel supply to the burner (24) is interrupted while maintaining the secondary air supply to the burner (24),
- the fuel/air mixture of the internal combustion engine (10) is enriched for a predeterminable time period (t3 - t6),
- on expiry of this time period, the enrichment is reversed and the secondary air blower (21) is switched off.

**9.** Method according to Claim 8, characterized in that the enrichment value (TI_BREN) is determined from the quotient of the air mass (LM_BKM) drawn in by the internal combustion engine (10) and the air mass (LM_ BREN) supplied by the secondary air blower (21).

**10.** Method according to Claim 9, characterized in that the enrichment value (TI_BREN) is corrected by means of a warm-up factor set before the operation of the burner.

**Revendications**

**1.** Dispositif de chauffage indépendant pour un catalyseur (14) disposé dans le collecteur des gaz d'échappement (12, 38) d'un moteur à combustion interne (10) et servant à dépolluer les gaz d'échappement,

- comportant une soufflante d'air secondaire (21) entraînée électriquement, qui fournit de l'air secondaire provenant de l'environnement,
- comportant un brûleur (24) auquel est envoyé l'air secondaire fourni et du combustible provenant d'un circuit de carburant (32, 31, 30, 34, 33), le catalyseur (14) étant chauffé par combustion du mélange combustible/air dans une chambre de combustion (25) ou par injection de l'air secondaire dans le collecteur des gaz d'échappement (12, 38) du moteur à combustion interne (10), caractérisé par

- une arrivée d'air unique (22) qui dirige l'air secondaire fourni par la soufflante d'air secondaire (21) dans la collecteur de gaz d'échappement (12, 38) exclusivement par la chambre de combustion (25) du brûleur (24), et
- un appareil de mesure (35) de la masse d'air, disposé dans l'arrivée d'air (22), qui mesure la masse d'air secondaire (LM_BREN) fournie par la soufflante d'air secondaire (21).

**2.** Dispositif suivant la revendication 1, caractérisé en ce que la masse d'air secondaire (LM_BREN) fournie par la soufflante d'air secondaire (21) peut être réglée en modifiant la hauteur de son signal électrique de commande (S_PWM).

**3.** Dispositif suivant la revendication 1, caractérisé en ce que

- la masse d'air secondaire (LM_BREN) fournie par la soufflante d'air secondaire (21) peut être réglée par une commande à découpage d'une soupape électrique dans l'arrivée d'air (22).

**4.** Procédé de chauffage indépendant d'un catalyseur (14) disposé dans le collecteur des gaz d'échappement (12, 38) d'un moteur à combustion interne (10) et servant à dépolluer les gaz d'échappement,

- comportant une soufflante d'air secondaire (21) entraînée électriquement, qui fournit de l'air secondaire provenant de l'environnement,
- comportant un brûleur (24) auquel est envoyé l'air secondaire fourni et du combustible provenant d'un circuit de carburant (32, 31, 30, 34, 33), le catalyseur (14) étant chauffé par combustion du mélange combustible/air dans une chambre de combustion (25) ou par injection de l'air secondaire dans le collecteur des gaz d'échappement (12, 38) du moteur à combustion interne (10), caractérisé en ce que
- la masse d'air secondaire (LM_BREN) fournie par la soufflante d'air secondaire (21) est amenée au collecteur des gaz d'échappement (12, 38) du moteur à combustion interne (10) par une unique arrivée d'air (conduit d'air de brûleur 22), exclusivement par la chambre de combustion (25) du brûleur (24).

**5.** Procédé suivant la revendication 4, caractérisé en ce que

- la masse d'air secondaire (LM_BREN) est mesurée au moyen d'un appareil de mesure (35) de la masse d'air,
- la masse d'air secondaire (LM_BREN) mesurée est comparée à une valeur prédéfinie, et
- en fonction du résultat de cette comparaison, un signal de commande (S_PWM) pour la soufflante d'air secondaire (21) est modifié, en valeur, de telle façon que l'écart entre la masse d'air secondaire (LM_BREN) mesurée et la masse d'air secondaire prédéfinie soit rendue minimale.

6. Procédé suivant la revendication 5, caractérisé en ce qu'un signal modulé en largeur d'impulsion sert de signal de commande (S_PWM) pour la soufflante d'air secondaire (21), et que le taux d'impulsions (0-100 %) de ce signal est fixé en fonction de valeurs pour la masse d'air secondaire (LM_BREN).

7. Procédé suivant la revendication 6, caractérisé en ce que le taux d'impulsions (0-100 %) du signal de commande (S_PWM) est corrigé en fonction de la tension de batterie (UB) appliquée à la soufflante d'air secondaire (21).

8. Procédé suivant la revendication 5, caractérisé en ce que

- après le démarrage (instant t0) du moteur à combustion interne (10), la soufflante d'air secondaire (21) est enclenchée et l'alimentation en combustible du brûleur (24) est libérée,
- l'alimentation en combustible du brûleur (24) reste maintenue assez longtemps pour que le catalyseur ait atteint une température prédéfinie,
- à partir de cet instant (t3), tout en maintenant l'alimentation en air secondaire du brûleur (24), l'alimentation en combustible du brûleur (24) est interrompue,
- le mélange carburant-air du moteur à combustion interne (10) est enrichi pour un intervalle de temps prédéfini (t3 - t6),
- après écoulement de cet intervalle de temps, l'enrichissement est réduit et la soufflante d'air secondaire (21) est coupée.

9. Procédé suivant la revendication 8, caractérisé en ce que la valeur d'enrichissement (TI_BREN) est déterminée à partir du quotient entre la masse d'air (LM_BKM) aspirée par le moteur à combustion interne (10) et la masse d'air secondaire (LM_BREN) fournie par la soufflante d'air secondaire (21).

10. Procédé suivant la revendication 9, caractérisé en ce que la valeur d'enrichissement (TI_BREN) est corrigée par un facteur de marche à chaud ajustée avant le fonctionnement du brûleur.

FIG 1

EP 0 813 648 B1

FIG 2